# EUROPÄISCHE PATENTANMELDUNG

(11) **EP 1 641 109 A1**
(43) Veröffentlichungstag der Anmeldung: **29.03.2006**
(21) Anmeldenummer: 04023081.5
(22) Anmeldetag: 28.09.2004
(51) Int. Cl.: H02M 3/10, G05F 1/56, B60R 16/02

(54) **Schaltnetzteil**

(71) Anmelder: Delphi Technologies, Inc., Troy, MI 48098 (US)
(72) Erfinder: Nöth, Helmut, 90489 Nürnberg (DE)
(74) Vertreter: Manitz, Finsterwald & Partner GbR

(57) **Zusammenfassung**

Die Erfindung betrifft ein Schaltnetzteil zur Umwandlung einer Eingangsgleichspannung (U_{E}) in eine kleinere Ausgangsgleichspannung (U_{A}) zum Betrieb eines Autoradios in einem LKW, mit wenigstens einem zwischen einem leitenden und einem nicht leitenden Zustand schaltbaren Schalter (16) zur Erzeugung eines gepulsten Gleichspannungssignals aus der Eingangsgleichspannung (U_{E}) oder einem aus der Eingangsgleichspannung (U_{E}) abgeleiteten Signal und wenigstens einem Ausgangsfilter (20) zur Erzeugung der Ausgangsgleichspannung (U_{A}) aus dem gepulsten Gleichspannungssignal, wobei eine von der Ausgangsgleichspannung (U_{A}) unabhängig betriebene Steuereinheit (18) zur Ansteuerung des Schalters (16) zum Schalten zwischen dem leitenden und dem nicht leitenden Zustand mit einem konstanten Tastverhältnis vorgesehen ist.

## Beschreibung

Die Erfindung betrifft ein Schaltnetzteil zur Umwandlung einer Eingangsgleichspannung in eine kleinere Ausgangsgleichspannung zum Betrieb eines Autoradios in einem LKW, gemäß dem Oberbegriff des Anspruchs 1. Ein Schaltnetzteil mit den Merkmalen des Oberbegriffs des Anspruchs 1 ist aus der US 2003/0090244 A1 bekannt.

Derartige Schaltnetzteile, die eine größere Gleichspannung in eine kleinere umwandeln und auch als Step-Down-Wandler bezeichnet werden, sind grundsätzlich bekannt und werden beispielsweise benutzt, um ein 12-V-Autoradio in einem 24-V-Bordnetz eines LKW zu betreiben. Bei derartigen Schaltnetzteilen, die aufgrund ihres höheren Wirkungsgrads gegenüber linear geregelten Netzteilen diesen bei der vorstehend genannten Anwendung vorgezogen werden, wird der Schalter zwischen dem leitenden und dem nicht leitenden Zustand geschaltet, um die Eingangsgleichspannung gewissermaßen zeitlich zu zerhacken und auf diese Weise das gepulste Gleichspannungssignal zu erzeugen. Anschließend wird das gepulste Gleichspannungssignal mittels des Ausgangsfilters gefiltert, um die Ausgangsgleichspannung zu erzeugen.

Wesentlich für den Betrieb der bekannten Schaltnetzteile ist die Regelung der Ausgangsgleichspannung, so dass auch bei unterschiedlichen an das Schaltnetzteil angehängten Lasten eine im Wesentlichen gleiche Ausgangsgleichspannung zur Verfügung gestellt werden kann. Dazu wird die Ausgangsgleichspannung kontinuierlich abgegriffen und einer Regeleinheit zugeführt. Diese regelt nun in Abhängigkeit von der jeweiligen Last das Tastverhältnis des Schalters und damit die entsprechende Ausgangsgleichspannung.

Derartige Schaltnetzteile besitzen jedoch mehrere Nachteile. So werden für die Regelung zahlreiche zusätzliche Komponenten benötigt, um das gewünschte Regelverhalten mit der erforderlichen Sicherheit und Schnelligkeit zu erreichen. Dies bedingt aber eine aufwendigere Elektronik und somit erhöhte Kosten bei der Herstellung. Darüber hinaus müssen für die Regelung besondere Schutzmaßnahmen ergriffen werden, speziell wenn eine hohe Spannungsfestigkeit bei großen Stromschwankungen gefordert ist.

Der Erfindung liegt die Aufgabe zugrunde, ein Schaltnetzteil der eingangs genannten Art zu schaffen, das sich durch einen möglichst einfachen Aufbau bei zugleich zuverlässiger und sicherer Funktionsweise auszeichnet, wobei insbesondere die Anzahl erforderlicher Bauteile möglichst gering gehalten werden soll.

Die Lösung dieser Aufgabe erfolgt durch die Merkmale des Anspruchs 1.

Die Erfindung zeichnet sich folglich insbesondere dadurch aus, dass die Steuereinheit, die den Schalter zwischen dem leitenden und dem nicht leitenden Zustand schaltet, unabhängig von der Ausgangsgleichspannung und somit unabhängig von einer an das Schaltnetzteil angehängten Last betrieben werden kann. Der Schalter wird vielmehr mit konstantem Tastverhältnis und bevorzugt mit konstanter Frequenz zwischen den beiden Zuständen geschaltet. Eine aufgrund wechselnder Last und/oder Eingangsspannung variierende Ausgangsgleichspannung wird im Gegensatz zu den aus dem Stand der Technik bekannten Schaltnetzteilen nicht nachgeregelt. Statt eines Schaltreglers wird also ein digitaler Spannungsteiler eingesetzt. Aus dem Tastverhältnis kann bei unbelastetem Schaltnetzteil unmittelbar auf das Verhältnis der Ausgangsgleichspannung zu der Eingangsgleichspannung geschlossen werden.

Das erfindungsgemäße Schaltnetzteil ermöglicht somit insbesondere die Simulation einer 12-V-Batterie in einem 24-V-Bordnetz eines LKW. Ein an das erfindungsgemäße Schaltnetzteil angehängtes Autoradio reagiert also genau so, als wäre es an einer 12-V-Batterie eines PKW angeschlossen. Insbesondere können mit dem erfindungsgemäßen Schaltnetzteil die charakteristischen Eigenschaften einer 12-V-Batterie wie Load-Dump-Verhalten, Anlasskurven, langsame Entladung etc. simuliert werden, für die das Autoradio hinsichtlich Reset-Verhalten, Mute-Verhalten, Ausgangsleistung, Stromaufnahme etc. ausgelegt ist. Darüber hinaus können die zum Stand der Technik genannten Nachteile vermieden werden.

Vorteilhafte Ausführungsformen der Erfindung sind in den Unteransprüchen, der Beschreibung und der Zeichnung angegeben.

Die Steuereinheit zur Ansteuerung des Schalters umfasst einen ein Rechtecksignal mit dem konstanten Tastverhältnis ausgebenden Rechteckgenerator. Beispielsweise kann bei einem Übergang des Pegels des Rechtecksignals von Low nach High bzw. von High nach Low der Schalter in den leitenden bzw. nicht leitenden Zustand geschaltet werden. Der High-Pegel des Rechtecksignals muss dabei hoch genug sein, um ein Schalten des Schalters in den leitenden Zustand zu bewirken.

Das Tastverhältnis des Schalters ist 50 %. Dies führt dazu, dass ohne Last die Ausgangsgleichspannung immer genau 50 % der Eingangsgleichspannung beträgt. Die 24-V-Spannungs-versorgung eines LKW kann somit in eine 12-V-Ausgangsgleichspannung zum Betrieb eines Autoradios umgewandelt werden, da das Verhältnis der Ausgangsgleichspannung zu der Eingangsgleichspannung dem Tastverhältnis entspricht.

Es ist weiterhin bevorzugt, dass der Schalter als elektronischer Schalter, beispielsweise als Transistor, insbesondere als MOSFET, ausgebildet ist, der durch das Rechtecksignal der Steuereinheit zwischen dem leitenden und dem nicht leitenden Zustand schaltbar ist. Bei einem MOSFET wird zur Steuerung des Schaltens das Gate des MOSFET mit dem Rechtecksignal der Steuereinheit beaufschlagt.

Des Weiteren wird erfindungsgemäß vorgeschlagen, dass das Ausgangsfilter als Tiefpassfilter ausgebildet ist. Mittels des Tiefpassfilters kann aus dem gepulsten Gleichspannungssignal durch zeitliche Mittelwertbildung die Ausgangsgleichspannung erzeugt werden.

Ferner kann erfindungsgemäß wenigstens ein mit dem Schalter verbundenes Eingangsfilter zur Glättung des Eingangssignals vorgesehen sein. Hierdurch kann eine zeitlich schwankende oder verrauschte Eingangsgleichspannung geglättet und als aus der Eingangsgleichspannung abgeleitetes Signal an den Schalter zur Erzeugung des gepulsten Gleichspannungssignals weitergegeben werden.

Nach einer weiteren bevorzugten Ausführungsform der Erfindung ist zur Referenzierung der Steuereinheit auf Eingangspotential der Masseanschluss der Steuereinheit mit dem signaleingangsseitigen Anschluss des Schalters verbunden. Hierdurch wird die Überspannungsfestigkeit bei unveränderter elektromagnetischer Verträglichkeit (EMV) erhöht.

Vorzugsweise ist zum Schließen des Stromkreises des Ausgangsfilters im nicht leitenden Zustand des Schalters eine Diodenklemme mit dem signalausgangsseitigen Anschluss des Schalters verbunden. Hierdurch kann insbesondere eine bei geschlossenem Schalter geladene Spule entladen werden.

Zur Invertierung des durch den Rechteckgenerator erzeugten Rechtecksignals ist ein Inverter vorgesehen, wobei durch das invertierte Rechtecksignal ein weiterer Schalter zwischen einem leitenden und einem nicht leitenden Zustand schaltbar ist, der mit einem weiteren Ausgangsfilter verbunden ist. Durch die Schaltfrequenz des einen Schalters bedingte Spannungsschwankungen der Ausgangsgleichspannung können mittels des weiteren Schalters und des weiteren Ausgangsfilters, die eine entsprechende, invertierte Spannungsschwankung verursachen, zumindest weitgehend ausgelöscht werden. Grundsätzlich kann anstelle des Inverters auch ein weiterer Rechteckgenerator vorgesehen sein, der ein dem durch den Inverter erzeugten Rechtecksignal entsprechendes Signal erzeugt.

Ferner kann erfindungsgemäß das Ausgangsfilter eine mit dem signalausgangsseitigen Anschluss des Schalters verbundene Spule und das weitere Ausgangsfilter eine mit dem signalausgangsseitigen Anschluss des weiteren Schalters verbundene weitere Spule umfassen, wobei die beiden Spulen miteinander magnetisch gekoppelt sind. Da die beiden Schalter umgekehrt zueinander geöffnet und geschlossen werden, wird die eine Spule entladen, während zeitgleich die andere Spule geladen wird, so dass bei miteinander gekoppelten Spulen eine gegenseitige Verstärkung des Entlade- bzw. Ladevorgangs eintritt. Somit können Spulen mit geringerer Induktivität und folglich mit kleineren mechanischen Abmessungen verwendet werden.

Die Erfindung betrifft weiterhin ein Autoradio mit einem wie vorstehend erläuterten Schaltnetzteil zum Betrieb des Autoradios in einem LKW. Ein handelsübliches Autoradio kann somit ohne großen Aufwand auch in einem LKW verwendet werden.

Die Erfindung wird nachfolgend beispielhaft unter Bezugnahme auf die Zeichnung erläutert. Es zeigen:
- Fig. 1: ein elektrisches Schaltbild eines an sich bekannten Schaltnetzteils, und
- Fig. 2: ein elektrisches Schaltbild eines erfindungsgemäßen Schaltnetzteils.

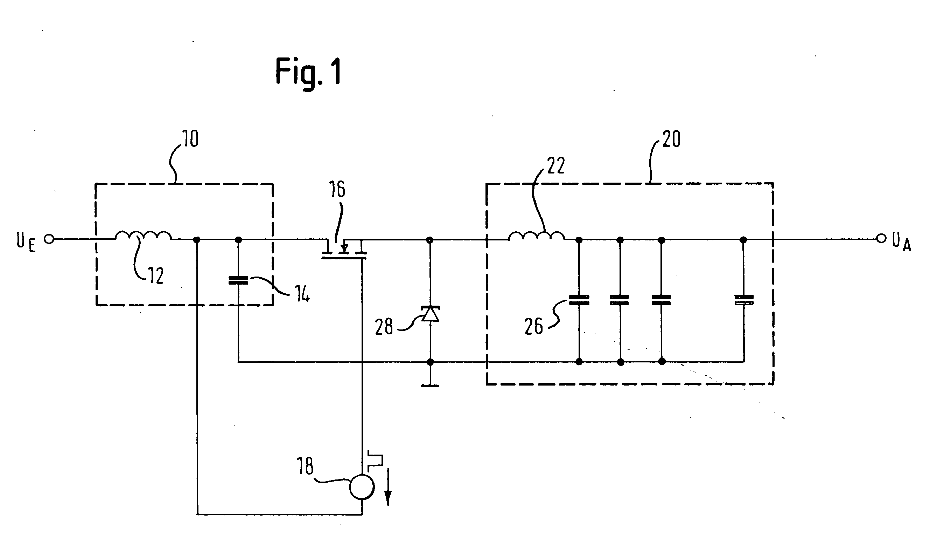

Das Schaltnetzteil zur Umwandlung einer Eingangsgleichspannung U_{E} in eine kleinere Ausgangsgleichspannung U_{A} zum Betrieb eines Autoradios in einem LKW gemäß Fig. 1 umfasst ein Eingangsfilter 10, der - falls überhaupt erforderlich - zur Glättung des Eingangssignals U_{E} ausgelegt ist. Das Eingangsfilter 10 weist hierzu eine Eingangsspule 12 und einen zu der Spule 12 in Reihe geschalteten Eingangskondensator 14 auf.

Der Ausgang des Eingangsfilters 10 ist mit dem signaleingangsseitigen Anschluss eines Schalters 16, der als MOSFET ausgebildet ist, verbunden. Der MOSFET 16 kann durch entsprechende Steuerung seines Gate-Potentials zwischen einem leitenden und einem nicht leitenden Zustand geschaltet werden, so dass aus dem von dem Eingangsfilter 10 zur Verfügung gestellten Signal ein gepulstes Gleichspannungssignal erzeugt werden kann.

Zur Ansteuerung des MOSFET 16 ist ein als Steuereinheit ausgebildeter Rechteckgenerator 18 vorgesehen, der das Gate des MOSFET 16 mit einem Rechtecksignal beaufschlagt, um den MOSFET 16 zwischen dem leitenden und dem nicht leitendem Zustand zu schalten. Das Rechtecksignal wird dabei mit einer zeitlich konstanten Frequenz und einem zeitlich konstanten Tastverhältnis von dem Rechteckgenerator 18 ausgegeben. Das Tastverhältnis des Rechtecksignals und somit auch das Tastverhältnis des Schalters 16 beträgt 50 %.

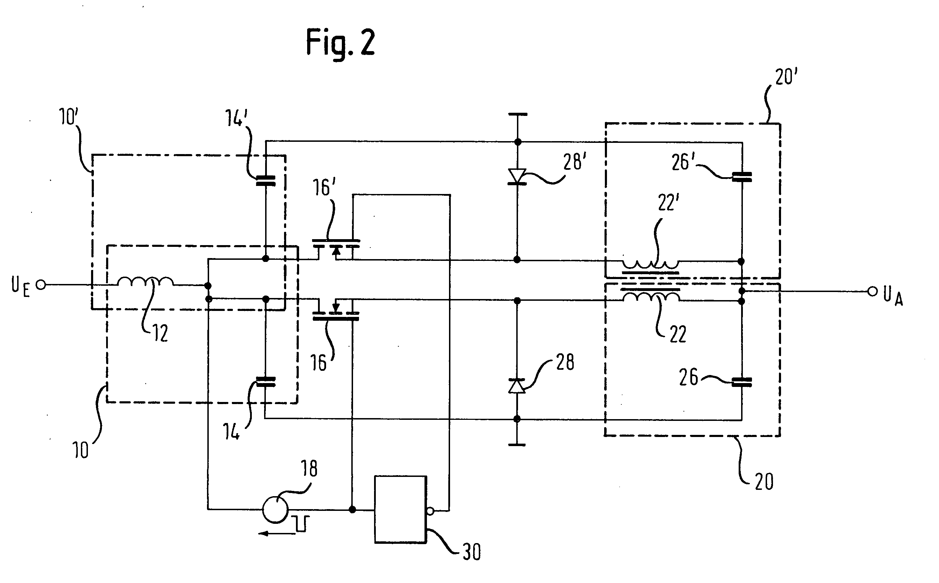

Der Masseanschluss des Rechteckgenerators 18 ist mit dem signaleingangsseitigen Anschluss (Source) des MOSFET 16 verbunden und somit auf Eingangspotential des Schaltnetzteils referenziert. Der signalausgangsseitige Anschluss (Drain) des MOSFET 16 ist mit einem als Tiefpass ausgebildeten Ausgangsfilter 20 zur Erzeugung der Ausgangsgleichspannung U_{A} aus dem gepulsten Gleichspannungssignal verbunden. Das Tiefpassfilter 20 umfasst hierzu eine Ausgangsspule 22 und beispielsweise mehrere parallel zueinander angeordnete Ausgangskondensatoren 26, die zwischen der dem Schalter 16 abgewandten Seite der Ausgangsspule 22 und Masse angeordnet sind. Es kann aber auch lediglich ein einziger Ausgangskondensator 26 vorgesehen sein (Fig. 2).

Darüber hinaus weist das Schaltnetzteil eine Diodenklemme 28 auf, die mit dem signalausgangsseitigen Anschluss des MOSFET 16 verbunden ist, um im nicht leitenden Zustand des MOSFET 16 den Stromkreis des Tiefpassfilters 20 zu schließen.

Der Rechteckgenerator 18 wird also unabhängig von der Ausgangsgleichspannung U_{A} betrieben, das Tastverhältnis des Rechtecksignals bzw. des MOSFET 16 bleibt auch bei wechselnder Last konstant. Die Ausgangsgleichspannung U_{A} wird nicht geregelt, da keine Rückkopplung der Ausgangsgleichspannung U_{A} auf den Rechteckgenerator 18 oder eine wie auch immer geartete Regeleinheit vorgesehen ist.

Nachfolgend wird die Funktionsweise des Schaltnetzteils gemäß Fig. 1 beschrieben.

Zunächst wird die Eingangsgleichspannung U_{E} durch das Eingangsfilter 10 geglättet, falls dies erforderlich sein sollte. Das Ausgangssignal des Eingangsfilters 10 wird dann dem MOSFET 16 zugeführt, der in Ansprechen auf das Rechtecksignal des Rechteckgenerators 18, das mit konstanter Frequenz und mit konstantem Tastverhältnis ausgegeben wird, alternierend zwischen dem leitenden und dem nicht leitenden Zustand geschaltet wird. Hierdurch wird das gepulste Gleichspannungssignal erzeugt, das dann an dem signalausgangsseitigen Anschluss des MOSFET 16 anliegt.

Befindet sich der MOSFET 16 in seinem leitenden Zustand, d.h. bei geschlossenem Schalter, fließt ein Strom durch die Ausgangsspule 22 und eine an das Schaltnetzteil angeschlossene Last, wobei der Strom die Ausgangsspule 22 zu laden beginnt. Die Ausgangskondensatoren 26 gleichen dabei den ansteigenden Spulenstrom an den gleichmäßigen Laststrom an. Wird der MOSFET 16 dann durch das Rechtecksignal des Rechteckgenerators 18 in den nicht leitenden Zustand geschaltet, d.h. wird der Schalter 16 geöffnet, kann sich die Ausgangsspule 22 über die Diodenklemme 28 und die an das Schaltnetzteil angehängte Last entladen.

Hierdurch kann eine an dem Schaltnetzteil angelegte Eingangsgleichspannung von U_{E} = 24 V in eine Ausgangsgleichspannung von U_{A} = 12 V umgewandelt werden. Somit kann ein herkömmliches Autoradio auf einfache Weise auch in dem 24-V-Bordnetz eines LKW betrieben werden.

Fig. 2 zeigt eine Ausführungsform des erfindungsgemäßen Schaltnetzteils, wobei jeweils gleiche oder entsprechende Teile mit denselben Bezugszeichen bezeichnet sind, so dass lediglich die Abweichungen des in Fig. 2 dargestellten Schaltnetzteils gegenüber dem in Fig. 1 dargestellten Schaltnetzteil erläutert werden.

An den Rechteckgenerator 18 ist gemäß Fig. 2 ein Inverter 30 angeschlossen, der das durch den Rechteckgenerator 18 ausgegebene Rechtecksignal invertiert. Das invertierte Rechtecksignal wird einem weiteren Schalter 16' zugeführt, um den weiteren Schalter 16, der ebenfalls als MOSFET ausgeführt ist, zwischen einem leitenden und einem nicht leitendem Zustand zu schalten. Die beiden MOSFET 16, 16' werden somit umgekehrt zueinander geöffnet und geschlossen.

Darüber hinaus ist der Drain-Anschluss des weiteren MOSFET 16' mit einem als Tiefpass ausgebildeten weiteren Ausgangsfilter 20' verbunden. Das weitere Tiefpassfilter 20' umfasst eine weitere Ausgangsspule 22' und einen weiteren Ausgangskondensator 26', wobei bevorzugt die Ausgangsspulen 22, 22' und die Ausgangskondensatoren 26, 26' jeweils den gleichen Wert besitzen. Die beiden Ausgangsspulen 20, 22' sind dabei miteinander magnetisch gekoppelt. Ferner ist ein weiterer Eingangskondensator 14' vorgesehen, der mit dem Source-Anschluss des weiteren MOSFET 16' verbunden ist, und mit der Eingangsspule 12 ein weiteres Eingangsfilter 10' ausbildet. Schließlich ist eine mit dem Drain-Anschluss des weiteren MOSFET 16' verbundene weitere Diodenklemme 28' vorgesehen.

In der Ausführungsform gemäß Fig. 2 sind somit zwei parallel zueinander geschaltete Signalpfade vorgesehen, die jeweils aus einem Eingangsfilter 10, 10', einem Schalter 16, 16', einer Diodenklemme 28, 28' und einem Ausgangsfilter 20, 20' aufgebaut sind. Die beiden Signalpfade unterscheiden sich im Betrieb dadurch, dass die beiden Schalter 16, 16' umgekehrt zueinander geöffnet und geschlossen werden. Die Eingangsfilter 10, 10', die Diodenklemmen 28, 28' und die Ausgangsfilter 20' erfüllen dabei die jeweilige in Zusammenhang mit Fig. 1 erläuterte Funktion.

Bei lediglich einem Signalpfad ist es in der Regel nicht möglich, die Schaltfrequenz des Schalter 16, 16' vollständig aus der Ausgangsgleichspannung U_{A} zu entfernen, so dass die Ausgangsgleichspannung U_{A} von einem periodischen Störsignal, der sog. Ripple-Spannung, überlagert ist. Bei der parallelen Verarbeitung der Eingangsgleichspannung U_{E} in den beiden Signalpfaden entsteht in jedem der beiden Signalpfade eine Ripple-Spannung, die aufgrund des zueinander invertierten Schaltbetriebs der beiden Schalter 16, 16' jedoch gegenphasig zueinander gerichtet sind, so dass aus der Ausgangsgleichspannung U_{A} das periodische Störsignal zumindest weitgehend entfernt ist.

### Bezugszeichenliste

- 10, 10': Eingangsfilter
- 12: Eingangsspule
- 14, 14': Eingangskondensator
- 16, 16': Schalter
- 18: Rechteckgenerator
- 20, 20': Tiefpassfilter
- 22, 22': Ausgangsspule
- 26, 26': Ausgangskondensator
- 28, 28': Diodenklemme
- 30: Inverter

- U_{E}: Eingangsgleichspannung
- U_{A}: Ausgangsgleichspannung

## Patentansprüche

1. Schaltnetzteil zur Umwandlung einer Eingangsgleichspannung (U_{E}) in eine kleinere Ausgangsgleichspannung (U_{A}) zum Betrieb eines Autoradios in einem LKW, mit wenigstens einem zwischen einem leitenden und einem nichtleitenden Zustand schaltbaren Schalter (16) zur Erzeugung eines gepulsten Gleichspannungssignals aus der Eingangsgleichspannung (U_{E}) oder einem aus der Eingangsgleichspannung (U_{E}) abgeleiteten Signal und wenigstens einem Ausgangsfilter (20) zur Erzeugung der Ausgangsgleichspannung (U_{A}) aus dem gepulsten Gleichspannungssignal,
**dadurch gekennzeichnet,**
**dass** eine von der Ausgangsgleichspannung (U_{A}) unabhängig betriebene Steuereinheit (18) zur Ansteuerung des Schalters (16) zum Schalten zwischen dem leitenden und dem nichtleitenden Zustand mit einem konstanten Tastverhältnis vorgesehen ist.

2. Schaltnetzteil nach Anspruch 1,
**dadurch gekennzeichnet,**
**dass** die Steuereinheit (18) zur Ansteuerung des Schalters (16) einen ein Rechtecksignal mit dem konstanten Tastverhältnis ausgebenden Rechteckgenerator (18) umfasst.

3. Schaltnetzteil nach einem der vorhergehenden Ansprüche,
**dadurch gekennzeichnet,**
**dass** das Tastverhältnis des Schalters (16) 50% ist.

4. Schaltnetzteil nach Anspruch 2 oder 3,
**dadurch gekennzeichnet,**
**dass** der Schalter als Transistor (16), insbesondere als MOSFET, ausgebildet ist, der durch das Rechtecksignal der Steuereinheit (18) zwischen dem leitenden und dem nichtleitenden Zustand schaltbar ist.

5. Schaltnetzteil nach einem der vorhergehenden Ansprüche,
**dadurch gekennzeichnet,**
**dass** das Ausgangsfilter als Tiefpassfilter (20) ausgebildet ist.

6. Schaltnetzteil nach einem der vorhergehenden Ansprüche,
**dadurch gekennzeichnet,**
**dass** wenigstens ein mit dem Schalter (16) verbundenes Eingangsfilter (10) zur Glättung der Eingangsgleichspannung (U_{E}) vorgesehen ist.

7. Schaltnetzteil nach einem der vorhergehenden Ansprüche,
**dadurch gekennzeichnet,**
**dass** zur Referenzierung der Steuereinheit (18) auf Eingangspotential der Masseanschluss der Steuereinheit (18) mit dem signaleingangsseitigen Anschluss des Schalters (16) verbunden ist.

8. Schaltnetzteil nach einem der vorhergehenden Ansprüche,
**dadurch gekennzeichnet,**
**dass** zum Schließen des Stromkreises des Ausgangsfilters (20) im nichtleitenden Zustand des Schalters (16) eine Diodenklemme (28) mit dem signalausgangsseitigen Anschluss des Schalters (16) verbunden ist.

9. Schaltnetzteil nach einem der Ansprüche 2 bis 8,
**dadurch gekennzeichnet,**
**dass** ein Inverter (30) zur Invertierung des durch den Rechteckgenerator (18) erzeugten Rechtecksignals vorgesehen ist, wobei durch das invertierte Rechtecksignal ein weiterer Schalter (16') zwischen einem leitenden und einem nichtleitenden Zustand schaltbar ist, der mit einem weiteren Ausgangsfilter (20') verbunden ist.

10. Schaltnetzteil nach Anspruch 9,
**dadurch gekennzeichnet,**
**dass** das Ausgangsfilter (20) eine mit dem signalausgangsseitigen Anschluss des Schalters (16) verbundene Spule (22) und das weitere Ausgangsfilter (20') eine mit dem signalausgangsseitigen Anschluss des weiteren Schalters (16') verbundene weitere Spule (22') umfasst, wobei die beiden Spulen (22, 22') miteinander magnetisch gekoppelt sind.

11. Autoradio mit einem Schaltnetzteil nach einem der vorhergehenden Ansprüche zum Betrieb des Autoradios in einem LKW.

## Geänderte Patentansprüche

### Geänderte Patentansprüche gemäss Regel 86(2) EPÜ.

**1.** Schaltnetzteil zur Umwandlung einer Eingangsgleichspannung (U_{E}) in eine kleinere Ausgangsgleichspannung (U_{A}) zum Betrieb eines Autoradios in einem LKW, mit
- zwei parallel zueinander geschalteten Signalpfaden, die jeweils einen zwischen einem leitenden und einem nichtleitenden Zustand schaltbaren Schalter (16, 16') zur Erzeugung eines gepulsten Gleichspannungssignals aus der Eingangsgleichspannung (U_{E}) oder einem aus der Eingangsgleichspannung (U_{E}) abgeleiteten Signal und jeweils einen Ausgangsfilter (20, 20') zur Erzeugung der Ausgangsgleichspannung (U_{A}) aus dem gepulsten Gleichspannungssignal aufweisen, und
- einem ein Rechtecksignal mit einem konstanten Tastverhältnis ausgebenden Rechteckgenerator (18) zur Ansteuerung des einen Schalters (16) zum Schalten zwischen dem leitenden und dem nichtleitenden Zustand mit einem konstanten Tastverhältnis,
**dadurch gekennzeichnet, dass**
- das Tastverhältnis des Rechteckgenerators 50% beträgt,
- ein Inverter (30) zur Invertierung des durch den Rechteckgenerator (18) erzeugten Rechtecksignals vorgesehen ist, wobei durch das invertierte Rechtecksignal der weitere Schalter (16') zwischen dem leitenden und dem nichtleitenden Zustand schaltbar ist, und
- der Rechteckgenerator unabhängig von der Ausgangsgleichspannung (U_{A}) betreibbar ist.

**2.** Schaltnetzteil nach Anspruch 1,
**dadurch gekennzeichnet,**
**dass** der Schalter als Transistor (16, 16'), insbesondere als MOSFET, ausgebildet ist, der durch das Rechtecksignal der Steuereinheit (18) zwischen dem leitenden und dem nichtleitenden Zustand schaltbar ist.

**3.** Schaltnetzteil nach einem der vorhergehenden Ansprüche,
**dadurch gekennzeichnet,**
**dass** das Ausgangsfilter als Tiefpassfilter (20, 20') ausgebildet ist.

**4.** Schaltnetzteil nach einem der vorhergehenden Ansprüche,
**dadurch gekennzeichnet,**
**dass** wenigstens ein mit dem Schalter (16, 16') verbundenes Eingangsfilter (10, 10') zur Glättung der Eingangsgleichspannung (U_{E}) vorgesehen ist.

**5.** Schaltnetzteil nach einem der vorhergehenden Ansprüche,
**dadurch gekennzeichnet,**
**dass** zur Referenzierung der Steuereinheit (18) auf Eingangspotential der Masseanschluss der Steuereinheit (18) mit dem signaleingangsseitigen Anschluss des Schalters (16, 16') verbunden ist.

**6.** Schaltnetzteil nach einem der vorhergehenden Ansprüche,
**dadurch gekennzeichnet,**
**dass** zum Schließen des Stromkreises des Ausgangsfilters (20) im nichtleitenden Zustand des Schalters (16) eine Diodenklemme (28) mit dem signalausgangsseitigen Anschluss des Schalters (16) verbunden ist.

**7.** Schaltnetzteil nach einem der vorhergehenden Ansprüche,
**dadurch gekennzeichnet ,**
**dass** das eine Ausgangsfilter (20) eine mit dem signalausgangsseitigen Anschluss des Schalters (16) verbundene Spule (22) und das weitere Ausgangsfilter (20') eine mit dem signalausgangsseitigen Anschluss des weiteren Schalters (16') verbundene weitere Spule (22') umfasst, wobei die beiden Spulen (22, 22') miteinander magnetisch gekoppelt sind.

**8.** Autoradio mit einem Schaltnetzteil nach einem der vorhergehenden Ansprüche zum Betrieb des Autoradios in einem LKW.
